# EUROPEAN PATENT APPLICATION

(11) **EP 2 605 332 A1**
(43) Date of publication of application: **19.06.2013**
(21) Application number: 11193806.4
(22) Date of filing: 15.12.2011
(51) Int. Cl.: H01Q 7/00, H01Q 1/38, H01Q 1/22, G06K 17/00

(54) **Antenna and method for producing an antenna**

(71) Applicant: Illinois Tool Works Inc., Glenview, IL 60026 (US)
(72) Inventor: de Wilde, Ignatius Gerardus Theodoor, 3024-CZ Rotterdam (NL)
(74) Representative: Trinks, Ole

(57) **Abstract**

A method for producing an antenna (100), and an antenna (100) are provided. In order to obtain an antenna (100) on a single slice of comparatively thin base material (11) while at the same time minimizing undesired electromagnetic interference, an antenna structure (21) and at least one separated connectable patch (23) are obtained by providing a conductive material on the base material (11), which is followed by providing a dielectric structure (31) which at least partially covers the antenna structure (21) to form a cross-connection area (32), wherein in a subsequent step a cross-connection structure (41) is printed onto the base material (11) which at least partially covers the cross-connection area (32) in order to establish a connection between the at least one separated connectable patch (23) and the antenna structure 21).

## Description

The present invention is directed to an antenna, preferably a panel loop antenna, and a method for producing an antenna.

Panel antenna arrangements providing a very flat antenna structure substantially only expanding within a two-dimensional plane are well-known in the art. A panel antenna is usually formed as a "patch" antenna, i.e. a substantially square metal patch which is formed over a ground plane.

Especially in connection with so-called near field communication (NFC-devices) potentially being provided with the necessary electrical power also via the electromagnetic field received by such a panel antenna, such as RFID-tags or the like, it was found that flat antenna structures can be produced in traditional copper-etching processes as well as printing processes. Regarding antenna printing processes, a printing device is provided with a suitable electrically conductive material, such as electrically conductive ink, which is then applied to a suitable printable base material by way of printing, at the same time forming the necessary geographic dimensions such as, for example, a printed loop antenna.

In order to connect an antenna, such as a printed loop antenna, to the near field communication device making use of this antenna, conventionally so-called patch fields are provided. A patch field providing a connectable structure is connected to the respective end of a conventional printed loop antenna also by way of etching or by way of printing. In general, an etched loop antenna and an etched patch field are applied to the base material during the same etching process. Likewise, a printed loop antenna and a printed patch field are applied to the base material in the same printing process.

With respect to electromagnetic compatibility and in order to avoid interference, it is desired to provide such connectable patch fields, each being connected to opposite ends of the loop antenna, respectively, in relative vicinity to each other. In other words, the connectable patch fields as described have to be disposed very close to each other in order to avoid undesired electromagnetical effects such as interference.

Especially when providing a closed-loop structure such as a loop antenna, one of the problems occurring with respect to conventional etched or printed antennas is that one end of the antenna, i.e. one loop end, is disposed within the loop of the loop antenna, while the other end, due to the wound structure of such a loop antenna, is disposed outside the loop. While it is possible to provide the conventional printed loop antenna with an electrical through-connection ("via") to the opposite side, i.e. the non-printed side of the base material and establishing a connection to a separated patch pad located inside the loop structure in the vicinity of the other patch pad, this establishing of the connection on the underside of the base material involves a cumbersome two-sided production process on the one hand, and a comparatively thick and therefore expensive base material on the other hand.

Providing the second patch pad connecting the outer loop end of the loop antenna outside the loop is a disadvantageous replacement since the area of the base material has to be enlarged. This results in an increased interference, which is undesirable.

Hence, it has been an objective of the present invention to overcome the aforementioned problems and to provide a method for producing an antenna and to provide an antenna itself, wherein the antenna of the present invention can be provided on a comparatively thin base material while decreasing undesirable interferences at the same time.

In accordance with the current invention, the problem is solved by providing a method for producing a printed antenna according to claim 1 and by providing a printed antenna according to claim 9, wherein an antenna structure and at least one separated connectable patch are provided on the base material followed by providing a dielectric structure on the base material, such that the dielectric structure at least partially covers the antenna structure to form a cross-connection area, followed by printing a cross-connection structure onto the base material such that the cross-connection structure at least partially covers the cross-connection area formed by the dielectric structure, wherein the cross-connection structure establishes a connection between the at least one separated connectable patch and the antenna structure.

By directly applying a dielectric layer onto the antenna structure (antenna pattern) and then establishing a connection between the separated connectable patch and, for example, an exterior end of the antenna structure such as a loop antenna, by directly printing a conductive material onto the dielectric layer in order to connect those two points, an antenna can be obtained with center connection points (connectable patches) without the need of expensive through-connections ("vias"). By providing the connection points near each other, for example centrally, it is then possible to minimize electromagnetic interference on a comparatively thin base material, wherein the reduced thickness of the base material once again renders the antenna in accordance with the present invention less expensive. By positioning the connection points, i.e. the connectable patches in relative vicinity to each other, the connection between such a antenna and, for example, an antenna chip of the device the antenna is to be connected to make it possible to have the connector as close as possible to the antenna chip set, which results in a very good electromagnetic behaviour.

In other words, the solution according to the invention makes it possible to provide a spiral antenna at first. Afterwards, the spiral antenna is transformed into a loop antenna by the use of a printed bridge, which allows the two antenna feed contacts (i.e., the connectable patches) to be adjacent to each other.

Furthermore, printing the cross-connection structure onto a layer of dielectric material at least partially covering an antenna structure and a connectable patch is an inexpensive and easy way of obtaining the necessary electrical connection.

Advantageous embodiments are indicted in the sub-claims.

In particular, according to the invention, the base material is a flexible material. Since an antenna, such as a printed antenna, according to the invention can be produced on a single slice of flexible base material, this allows for much more design flexibilities for the antenna and, accordingly, for the mobile device or the like the antenna is attached to.

Moreover, according to an aspect of the invention, the antenna structure comprises at least one loop antenna. While other kinds of antenna structures are possible within the scope of the invention, a loop antenna which is manufactured in accordance with the invention fits on a comparatively small slice of base material without having to provide any extra space on the outside of the loop for providing any exterior connectable patch. Of course, it is also possible to provide a spiral antenna at first, while in a subsequent process step this spiral antenna is transformed into the at least one loop antenna through the use of the printed bridge.

According to another aspect of the invention, the at least one separated connectable patch is disposed within the loop of the loop antenna. Then it is possible to dispose the at least one separated connectable patch which is, for example, connected to the exterior and of the loop antenna, in relative vicinity to the internal end of the loop antenna, thereby further minimizing undesired interference.

According to another aspect of the present invention, the loop antenna comprises a first loop end disposed within the loop of the loop antenna and a second loop end disposed outside the loop of the loop antenna, wherein the cross-connection structure connects the at least one separated connectable patch and the second loop end of the loop antenna. In this connection, it is preferable that the first loop end is directly connected to the connectable patch, which is part of an antenna match structure or antenna interconnect structure, respectively. Such a connectable patch is directly connected to the first loop end of the loop antenna with substantially no additional space in between the first loop end and the connectable patch. Thereby, the connectable patch is easily obtained together with the printing of the antenna structure onto the base material, while connecting the connectable patch, forming a part of the antenna interconnect structure, and the antenna structure at the same time.

According to another aspect of the present invention, the antenna structure is printed onto the base material. Then it is possible to obtain both the antenna structure and the cross-connection structure by way of printing, which may reduce the number of necessary steps during production and/or the number of manufacturing machines involved, rendering the manufacturing process cheaper.

Likewise, alternatively or additionally to printing the antenna structure, also the at least one connectable patch is obtained by way of printing. Then it is possible to further reduce the number of necessary steps during production and/or the number of manufacturing machines involved, rendering the manufacturing process cheaper.

Alternatively, according to another aspect of the present invention, the antenna structure is obtained in an etching process, preferably in a copper flex-film etching process. Thereby, it is possible to obtain an etched antenna structure having a special quality, such as special electromagnetic behaviour, which may not be obtainable by printing. Yet, the cross-connection structure is still provided by way of printing, i.e. in a cheap and simple manner.

Likewise, alternatively or additionally to etching the antenna structure, also the at least one connectable patch is obtained in an etching process, preferably in a copper flex-film etching process, and most preferably during the same process step as the antenna structure is obtained. Thereby, in addition to obtaining possibly advantageous electromagnetic behaviour of the at least one etched connectable patch or the like, the number of process steps is reduced when the at least one connectable patch is obtained together with the etched antenna structure.

According to another aspect of the present invention, the dielectric structure is obtained by way of printing. This printing of the dielectric structure is independent from whether the antenna structure and/or the at least one connectable patch is/are obtained by way of printing or by way of etching. By printing the dielectric structure, the insulating layer in between the antenna structure and the at least one connectable patch on the one hand, and the cross-connection structure on the other hand is obtained in an uncomplicated manner, rendering the manufacturing process cheaper.

The invention will now be further described by way of an exemplary embodiment with reference to the accompanying drawings in which:
- Fig. 1: shows schematically a top view onto a slice of base material already provided with a printed antenna structure and a printed separated connectable patch;
- Fig. 2: shows a schematical top view onto the slice of base material according to Fig. 1, wherein in a subsequent step a dielectric structure has been applied; and
- Fig. 3: shows a readily-obtained printed antenna in a schematical top view following Figs. 1 and 2, wherein in a subsequent printing process a cross-connection structure has been established.

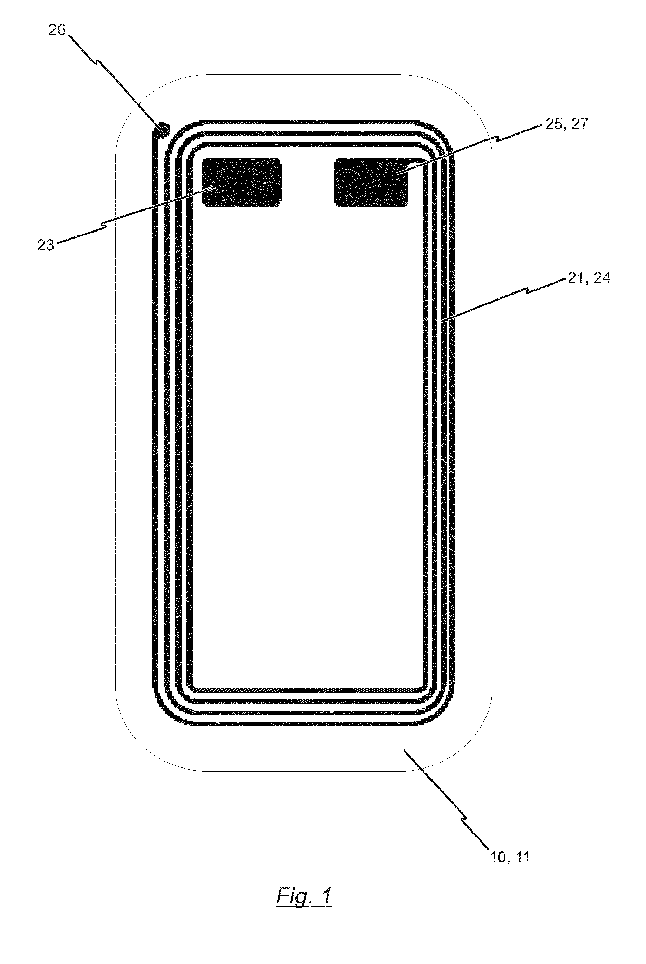

Fig. 1 is a schematical top view onto a first layer 10 of the base material 11, the base material 11 being printable, comparatively thin and preferably flexible.

As shown in the embodiment of Fig. 1, an antenna structure 21, here in the form of a loop antenna 24, and a separated connectable patch 23 have already been printed onto the base material 11, thereby forming a second layer 20 of electrically conductive material in the form of a loop 24 and a patch 23. The electrically conductive material is printable and can be printable copper or electrically conductive ink, for example. Of course, also different suitable electrically conductive printable materials may be used.

While in this exemplary embodiment, the base material 11 is printable, and the antenna structure 21 and the connectable patch 23 are both printed onto the base material, the present invention is not to be understood to be limited to printing the antenna structure 21 and/or the connectable patch 23. Hence, the antenna structure 21 and/or the connectable patch 23 may also be obtained in another suitable manufacturing process, such as copper-based etching.

The loop antenna 24 as shown in Fig. 1 comprises a first loop end 25 and a second loop end 26. The first loop end 25 of the loop antenna 24 is disposed inside the loop of the loop antenna 24 and directly connected to an enlarged patch area, i.e. a connectable patch 27, with substantially no further space in between the first loop end 25 and the connectable patch 27. In the direct vicinity of this connectable patch 27, a separated connectable patch 23 has been obtained in the same printing process in which the loop antenna 24 was obtained. The second loop end 26 of the loop antenna 24 lies outside the loop of the loop antenna 24 and, at the time after only the first process steps of providing a base material, printing an antenna structure and printing the at least one separated connectable patch have been performed, as it is shown in Fig. 1, no connection has been established between the second loop end 26 of the loop antenna 24 and the separated connectable patch 23 yet.

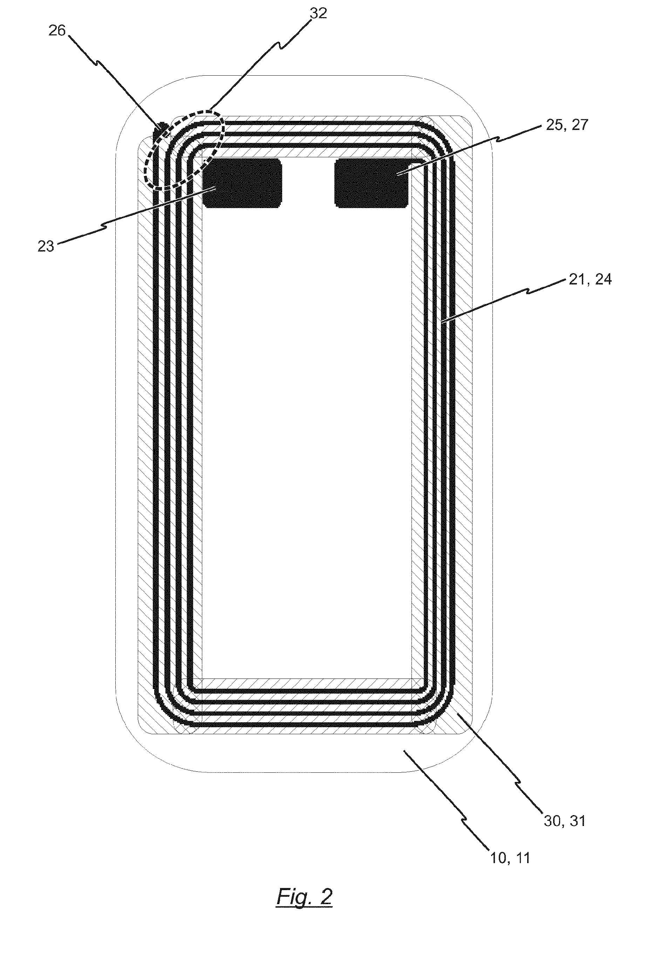

The schematic top view of Fig. 2 shows the arrangement of Fig. 1, wherein in a subsequent process step additionally a dielectric structure 31 has been printed onto the base material 11 forming a third layer 30 directly on top of the base material 11 and partially also on the second layer 20, i.e. onto the conductive antenna structure 21. According to the view of Fig. 2, for distinct, overlapping and substantially rectangular areas of dielectric structures 31 are shown. However, an arbitrary number of dielectric areas or dielectric structures 31 can be provided in the third layer 30. The dielectric structure 31 as shown in Fig. 2 partially covers the antenna structure 21 in order to form a cross-connection area 32, which is denoted in Fig. 2 by a dashed line. In this cross-connection area 32, the dielectric structure 31 printed on top and across the antenna structure 21 of electrically conductive material provides for an electrical insulation between the antenna structure 21 below and a cross-connection structure 41 obtained in a subsequent printing process and described further below. Hence, by applying the dielectric structure 31 which then forms a cross-connection area 32, a short-circuiting of the antenna structure 21 is avoided when providing such a cross-connection structure 41 on top of those layers.

While in this exemplary embodiment, the dielectric structure 31 is printed onto the base material, the present invention is not to be understood to be limited to printing the dielectric structure 31. Hence, the dielectric structure 31 may also be obtained in another suitable manufacturing process.

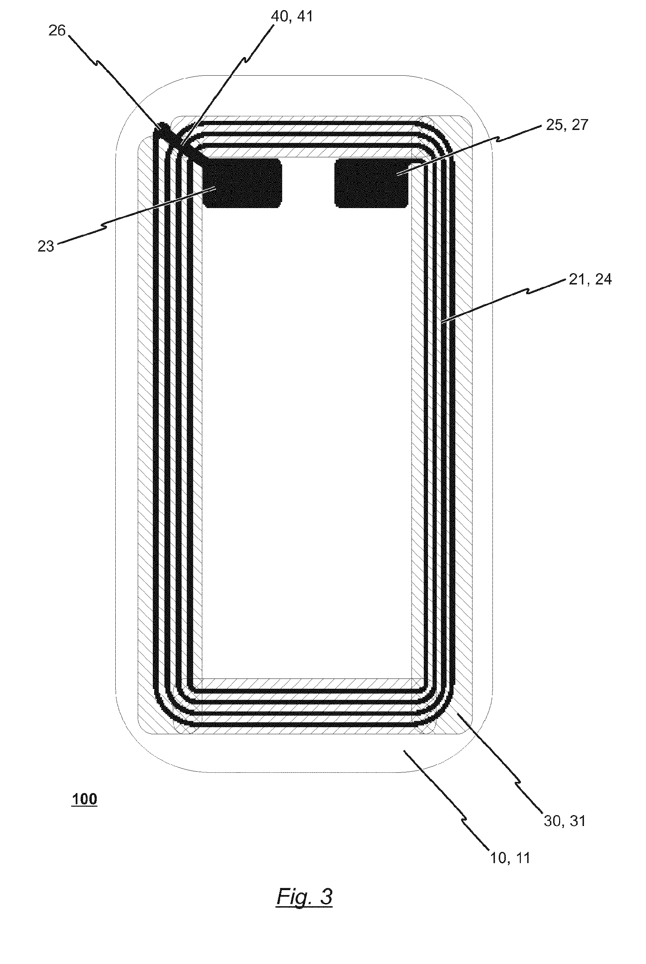

Finally, Fig. 3 is a schematic top view on a readily obtained printed antenna 100 according to the present invention. Here, a cross-connection structure 41 has been printed on top of the layers 10, 20, 30 of base material 11, the antenna structure 21 and the dielectric structure 31 within the cross-connection area 32, such that the cross-connection structure 41 establishes a connection between the separated connectable patch 23 and the second loop end 26 of the loop antenna 24. Both connection patches, i.e. the separated connectable patch 23 and the connectable patch 27 are now disposed within the loop of the loop antenna 24 in relative vicinity to each other, thereby decreasing possible interference when a high-frequency device such as an antenna chip set is connected to the patches 23, 27, and the printed antenna 100 is provided with an electromagnetic field.

The exterior loop end, i.e. the second loop end 26 of the loop antenna 24, and the inner loop end, i.e. the first loop end 25 of the loop antenna 24 are then both connected by means of patches 23, 27 which are disposed close to each other without the need of any electrical through-connections all within a printing process, such that an improved printed antenna 100 according to the invention is obtained.

While in the exemplary embodiment as described, first the antenna structure 21 and the at least one separated connectable patch 23 are printed onto the base material, followed by a subsequent printing of the dielectric structure 31 and a printing of the cross-connection structure 41 on top of the dielectric structure 31, it is of course also possible to provide the cross-connection structure 41 in a first step directly on top of the base material 11. Then, the dielectric structure 31 is applied on top of the base material and partially overlapping the cross-connection structure, wherein in a subsequent step the antenna structure and the at least one separated connectable patch are printed as a topmost layer.

In any case, printing the cross-connection structure 41 provides an easy, uncumbersome and cheap way of obtaining the necessary electrical connection between the at least one separated connectable patch 23 and the antenna structure 21.

### List of reference signs

- 10: first layer
- 11: base material
- 20: second layer
- 21: antenna structure
- 23: separated connectable patch
- 24: loop antenna
- 25: first loop end
- 26: second loop end
- 27: antenna-integrated connectable patch
- 30: third layer
- 31: dielectric structure
- 32: cross-connection area
- 40: fourth layer
- 41: cross-connection structure
- 100: antenna

## Claims

1. Method for producing an antenna (100), preferably a panel loop antenna, wherein the method comprises the following steps:
- providing a base material (11);
- providing an antenna structure (21) on the base material (11);
- providing at least one separated connectable patch (23) on the base material (11);
- providing a dielectric structure (31) on the base material (11), wherein the dielectric structure (31) at least partially covers the antenna structure (21) to form a cross-connection area (32);
- printing a cross-connection structure (41) onto the base material, the cross-connection structure (41) at least partially covering the cross-connection area (32) formed by the dielectric structure (31), wherein the cross-connection structure (41) establishes a connection between the at least one separated connectable patch (23) and the antenna structure (21).

2. The method of claim 1,
wherein the base material (11) is a flexible material.

3. The method of claim 1 or 2,
wherein the antenna structure (21) comprises at least one loop antenna (24).

4. The method of claim 3,
wherein the at least one separated connectable patch (23) is disposed within the loop of the loop antenna (24).

5. The method of claim 3 or 4,
wherein the loop antenna (24) comprises a first loop end (25) disposed within the loop of the loop antenna (24) and a second loop end (26) disposed outside the loop of the loop antenna (24), and wherein the establishing of the connection is made between the at least one separated connectable patch (23) and the second loop end (26) of the loop antenna (24).

6. The method of claim 5,
wherein a connectable patch (27) is directly connected to the first loop end (25) with substantially no additional space in between the first loop end (25) and the connectable patch (27).

7. The method of any one of the preceding claims,
wherein providing the antenna structure (21) on the base material (11) comprises printing the antenna structure (21)
and/or
wherein providing the at least one separated connectable patch (23) on the base material (11) comprises printing the at least one separated connectable patch (23)

8. The method of any one of claims 1 to 7,
wherein providing the antenna structure (21) on the base material (11) comprises providing an etched antenna structure (21), preferably an etched copper flex-film antenna structure (21)
and/or
wherein providing at least one separated connectable patch (23) on the base material (11) comprises providing at least one etched separated connectable patch (23), preferably at least one etched copper flex-film connectable patch (23).

9. The method of any one of the preceding claims,
wherein providing the dielectric structure (31) on the base material (11) comprises printing the dielectric structure (31).

10. Antenna (100), preferably panel loop antenna,
wherein the antenna (100) comprises:
- a first layer (10) of base material (11);
- a second layer (20) of electrically conductive material provided on the first layer (10), in particular provided by way of printing, the second layer (20) forming an antenna structure (21) and at least one separated connectable patch (23);
- a third layer (30) of dielectric material at least partially overlaying the second layer (20), in particular at least partially overprinted over the second layer (20), the third layer (30) forming a dielectric structure (31) at least partially covering the antenna structure (21) to form a cross-connection area (32);
- a forth layer (40) of electrically conductive material at least partially overprinted over the connection area (32) of the third layer (30), the forth layer (40) being designed to establish a connection between the at least one separated connectable patch (23) and the antenna structure (21) by means of a cross-connection structure (41).

11. Antenna (100) according to claim 10,
wherein the base material (11) is a flexible material.

12. Antenna (100) according to claim 10 or 11,
wherein the antenna structure (21) comprises at least one loop antenna (24).

13. Antenna (100) according to claim 12,
wherein the at least one separated connectable patch (23) is disposed within the loop of the loop antenna (24).

14. Antenna (100) according to claim 12 or 13,
wherein the loop antenna (24) comprises a first loop end (25) disposed within the loop of the loop antenna (24) and a second loop end (26) disposed outside the loop of the loop antenna (24) and wherein the cross-connection structure (41) is provided between the at least one separated connectable patch (23) and the second loop end (26) of the loop antenna (24).

15. Antenna (100) according to claim 14,
wherein a connectable patch (27) is designed to be directly connected to the first loop end (25) with substantially no additional space in between the first loop end (25) and the connectable patch (27).
